# EUROPEAN PATENT APPLICATION

(11) **EP 1 143 357 A2**
(43) Date of publication of application: **10.10.2001**
(21) Application number: 01303277.6
(22) Date of filing: 06.04.2001
(51) Int. Cl.: G06F 17/30

(54) **Method for defining iteration configuration in a data transformation specification**

(30) Priority: 07.04.2000 US 544971
(71) Applicant: Vitria Technology, Inc., Sunnyvale, CA 94086 (US)
(72) Inventor: Upton, Francis R., Oakland, CA 94610 (US)
(74) Representative: Gill, David Alan

(57) **Abstract**

A computer-implemented process for specifying instructions for transforming an input message to an output message including the steps of: defining an input iterator with each sequence of the input message, associating an input iterator with a sequence of the output message in response to placement of a field reference in an expression tree within an output sequence.

## Description

### Field Of The Invention

This invention relates to computer systems and, more particularly, to defining iteration configurations in information processing systems that transform data from one form to another.

### History Of The Prior Art

Computer applications often need to use data prepared by different computer applications. For example, when a bill is paid by a company using a first accounts payable application, some of the information associated with that bill needs to be forwarded to a second general ledger application, to be recorded for the company's financial statements. It is possible that the first and second applications were provided by two different companies and that the exact format and content of the data representing the bill differ. For example, the first application may represent an account number as two data items: a department code of three characters and an account of up to four digits; while the second application represents an account number as a single data item of up to ten digits. To allow the account data from the first application to be used by the second application, the department code and account data items from the first application can be concatenated into the single ten digit account number data item when the data associated with the bill is forwarded to the second application.

However, if the data from the first application is transferred to a third application requiring yet another format for an account number, this solution may not work. To obviate this problem, instead of modifying the first application, the billing data from the first application may be intercepted and modified by an "interceptor" computer program not associated with either the first or second application. In this way, neither application need be modified; and, if either the first or the second application changes, only the interceptor program must change.

Large companies can have thousands of computer applications that must communicate data with each other. Because an interceptor program must be written for every pair of communicating applications, this could result in an unmanageable number of interceptor programs. To help alleviate this situation, general purpose software programs have been devised to transform data from one form to another. To further facilitate matters, standards have been created for various aspects of the representation of data.

Data that is exchanged between applications is broken into messages, each containing data items. In the above example, the data items associated with a bill (the amount, account number, date paid, vendor, and the like) collectively form a single message.

One can separate the content of a message into encoding and semantics. Encoding deals with the many issues associated with representing the data on the particular medium of exchange (which could be, for example, a punched card, magnetic disk, or a telephone wire). It also includes number and character representation, separation of the different data items in a single message, the mechanism for naming the data items, how characters are represented, and other issues necessary to convey the semantics of the message.

Nearly all aspects of message encoding are specified by means of standards. One of the most popular standards in this area is the Extensible Markup Language (XML) specification. This specification provides a method of encoding where data items can be named and structured into named groups.

Although data transformation software must deal with encoding issues, they are not important for this description and will not be discussed further. Only the semantic: aspects of data transformation are considered.

The semantics are the meaning of the message. Semantics include the name of each of the data items, the order and structure in which the data items appear in the message, and the meaning of the values of each of the data items. The remainder of this description refers to a data item containing a single value as a "field." Fields in a message can be arranged in named groups called "containers." For example, a person's name can be represented as follows:

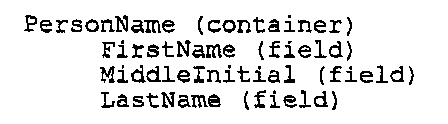

In this example, referring to the data item "PersonName" is a reference to the entire name. When there are hundreds and maybe thousands of data items associated with a message, grouping is necessary to easily examine and manipulate parts of the message. Containers can hold fields and other containers. Fields or containers may be repeated either a fixed or variable number of times. Consider the case of a message representing a customer that includes a history of all of the orders that customer has placed. Typically, this is represented by a container that holds the information associated with each order; and that container repeats for a variable number of occurrences. When a field or container can repeat, this is called a "sequence."

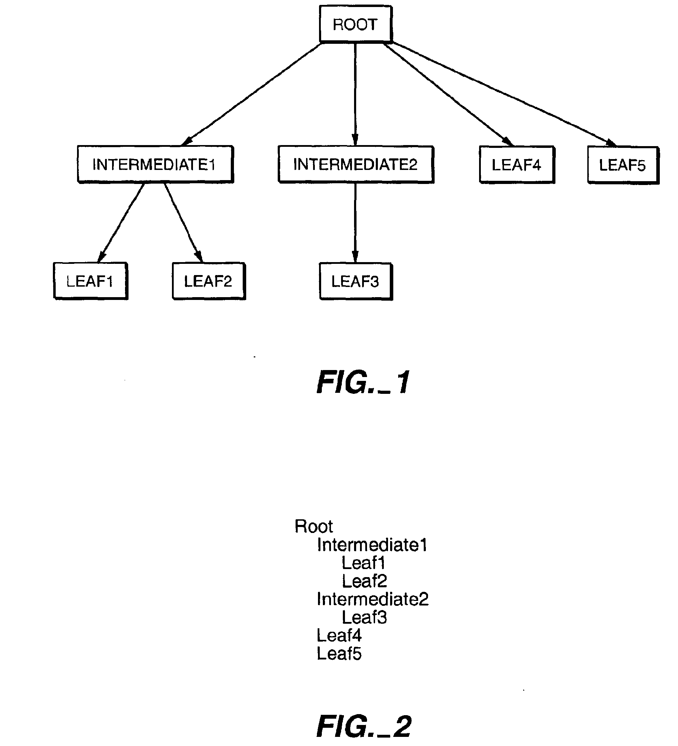

The definition of the content of a message is called a "schema" and is represented using a "tree." A tree is a method of relating multiple entities that are called "nodes." Each node has a single parent and may have zero or more children. The top most node, that is, the one node without a parent is called the "root." If a node has both a parent and one or more children, is it called an "intermediate." Finally, a node with no children is a "leaf." An example of a tree is illustrated in Figure 1. The root and intermediate nodes are containers (and possibly sequences), and the leaf nodes are fields.

For the purpose of a transformation definition, there is an input schema, which defines the input message and an output schema defining the output message. Here is an example of a simple schema:

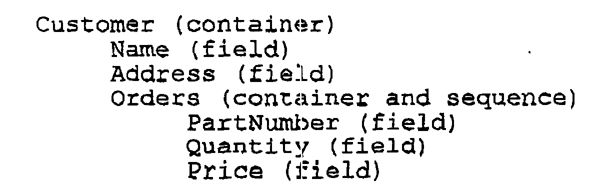

When referring to a field in the schema, the field name is normally qualified with its enclosing containers. In the above example, the PartNumber field would be referred to as Customer.Orders.PartNumber.

A transformation consists of the input and output schema and all of the rules that describe how to build the output message from the input message. Typically, a transformation processes a single input message producing a single output message. Transformations are capable, however, of processing one or more input messages producing one or more output messages.

There are several different types of transformations. One type is used for copying data from an input field with one name to an output field with a different name. A second type of transformation performs a function on an input field that alters it in some way and sets an output field to the result of that function. An example is converting a date from 23 Jun 1998 to 06/23/1998. A third type of transformation fabricates an output field either from multiple input fields or from a portion of a single input field. Fabricating may also include performing a function as mentioned above.

A fourth type of transformation creates a sequence of output fields based on a sequence of input fields. For example, in the message above containing a customer and the associated orders, the output message may contain a sequence of orders each of which corresponds to an order in the input message. Further, performing a filtering operation to exclude some of the orders from the output might be necessary. A filtering condition specifies the criteria for selection of input data before it is considered for further processing. An exemplary filtering operation might select all orders whose total amount was over one hundred dollars.

A fifth type of transformation alters the structure of the data. In the customer example above, suppose it was desired to have multiple messages produced from the single customer message, where there is one output message per order. Such an output message would have fields related to both the customer and the order. More complicated structural transformations which are sometimes required will be discussed below.

Typically, the details of the semantic structure of the messages associated with an application are best understood by those who use those applications on a daily basis. In general, such persons are not programmers. Current transformation software allows non-programmers to use a graphical user interface (GUI) to handle some of the simpler cases. For example, a single field may be copied from the input to the output using "drag and drop." Drag and drop is a standard GUI technique where a mouse is used to select a field, visually carry (drag) it to another field, and then release (drop) it there.

However, programming (rather than GUI) techniques have been required when more complex transformations must be implemented such as the fourth and fifth types of transformations specified above. For example, to generate such transformations requires a method of specifying what is to occur for each unique transformation. A transformation must indicate the characteristics of the input data, the characteristics of the output data, filtering conditions for selecting input data, and the steps necessary to create the output data based on the input data. For each field of output, a sequence of steps must be defined to create that field. Both the steps to create the output data and the filtering conditions on the input data are often specified using "expressions." Expressions are defined in some sort of text based programming language (usually proprietary) that requires knowledge of programming to use.

A "general expression tree" is a tree that connects one or more expressions. Each expression returns a single value and takes zero or more parameters. The general expression tree consists of a root expression whose returned value is the result of executing the tree. Each of the children of the root is another expression, whose return value is a parameters for the root. This process is repeated for as many expressions as desired.

A "tree view" is a method for displaying a set of related objects that can be represented as a tree. This view is standard in modem graphical user interfaces for presenting things like files which are enclosed in folders (which may be in other folders, and so on). Generally, a tree view has mechanisms to move nodes from one tree to another tree (or another part of the same tree). Examples of the tree view are the Microsoft Windows Explorer and modern email programs that provide a way to contain mail messages in folders. Graphical presentations of tree views have methods to "drag and drop" a node from one place to another. Although graphical presentations are the most prevalent at the present state of the art, textual forms may be used to describe a tree view; and manipulation of those forms may be accomplished by cut, copy, and paste (or similar) techniques that provide ease of use and simplicity for the non-programmer.

As will be understood, the concepts for creating many transformations are quite complex. The creation of transformations is, consequently, a process that would be much easier if it could be handled entirely through a graphical interface or some other easily understandable interface.

There are some standards that define semantic transformation capabilities. However, all of these are text-based specifications that require training in programming to use. They are presented here in order to provide a basis for determining the capability of a transformation tool.

Object Query Language (OQL) is a specification that supports query (that is, finding data) and transformation of the results of the query. The transformation capabilities of OQL are quite powerful, allowing all of the types of transformations listed above. A complete transformation tool should be capable of any type of transformation that is expressible with OQL.

Extensible Stylesheet Language - Transformation (XSLT) is another relevant standard. This standard was originally developed as part of the XSL standard for creating HTML documents from XML documents. The transformation portions of the standard were generalized and separated into XSLT. XSLT is also powerful, although the level and amount of specification required to do more complex operations is more than that of OQL.

Because these standards are all text-based and require knowledge of programming techniques, it has been either impossible or cumbersome for the prior art to adapt them to a graphical interface usable by non-programmers. There are no transformation software tools that allow all of the desired capabilities completely within a graphical user interface (or some other interface that is easily understood and manipulated) such that a non-programmer can specify the transformations without having to write computer code of some sort. Because of the increasing need for data transformation, it is important that the people that have the best understanding of the semantics of the data, but lack special training in the art of programming, be able to perform complex transformations.

It is also important to provide a simplified programming environment by which transformations can more easily be created by those who are skilled at programming.

One of the processes which must be executed quite often in transforming messages from one application to another is the iteration process. Such a process is typically carried out by a loop process in typical programming languages. The process steps through a sequence of elements which all to be handled in the same manner and provides output based on the criteria, of the particular interation process.

Defining a loop process requires significant programming ability using the software tools available in the prior art especially where the process to be carried out is involved. Because the iteration process occurs so often in message transformations, it is desirable that the ability to provide such processes be available to those who have the best understanding of the semantics of the data, but lack special training in the art of programming.

### Summary Of The Invention.

It is, therefore, an object of the present invention to provide easily understood and manipulated methods which allow non-programmers to generate iteration processes for complex transformations.

This and other objects are accomplished in the present invention by a computer-implemented process for specifying instructions for transforming an input message to an output message including the steps of: defining an input iterator with each sequence of the input message, associating an input iterator with a sequence of the output message in response to placement of a field reference in an expression tree within an output sequence.

These and other features of the invention will be better understood by reference to the detailed description which follows taken together with the drawings in which like elements are referred to by like designations throughout the several views.

### Brief Description Of The Drawings

Figure 1 is a diagram illustrating a tree in standard form.
Figure 2 is a diagram illustrating a tree in a form more suitable for use by a graphical user interface.
Figure 3 is a diagram representing an input schema and an output schema, an expression tree, and expression types utilized to generate transformations.
Figure 4 is a diagram outline for implementing a process by which the steps necessary to produce an expression tree.
Figure 5 is a flowchart of a process used to calculate the iterator assignment.

### Detailed Description:

In this detailed description, the operations will be described as carried out in a preferred graphical embodiment. Such an embodiment utilizes a graphical interface (GUI) and uses various well known techniques such as drag and drop developed to make manipulation of data and other elements easy for an unskilled user.

For example, a tree view is a common means of expressing hierarchical data in a graphical user interface. In the present invention, the tree view is used to express the input and output schemas, the possible function and constraint types, and the expression trees. The use of a tree view for the display of schemas and expression types graphically is known; however, the use of the tree view for the creation, display, and manipulation of expression trees is new.

Even though.a graphical embodiment is described, it will be recognized by those skilled in the art that the underlying process may be implemented by other interfaces designed to make manipulation by a relatively unskilled user a simple and intuitive process. For example, textual forms may be used to describe a tree; and manipulation of those forms may be accomplished by copy and paste (or similar) techniques that provide ease of use and simplicity for the non-programmer. Whenever a technique is described for use in a graphical interface, the description is intended to encompass use in these other forms of interfaces and will be apparent to those skilled in the art.

### Steps to Configure a Transformation

The following steps are taken to define a transformation which may utilize the iteration capabilities of the present invention.

A first step that the user takes in providing a transformation which may utilize the present invention is to select the input and output schemas that will be utilized. Typically, each application program that is to be a source or a recipient of data utilizes a known format (schema) for presenting that data in a message. From these, a database of those schemas that are expected to be utilized is prepared and provided. The database may index the schema by application program name and. version. If a program provides a plurality of schema, further sub-catagorization may be provided. From these, a listing may be provided to the user from which selection of input schema and output schema may be accomplished.

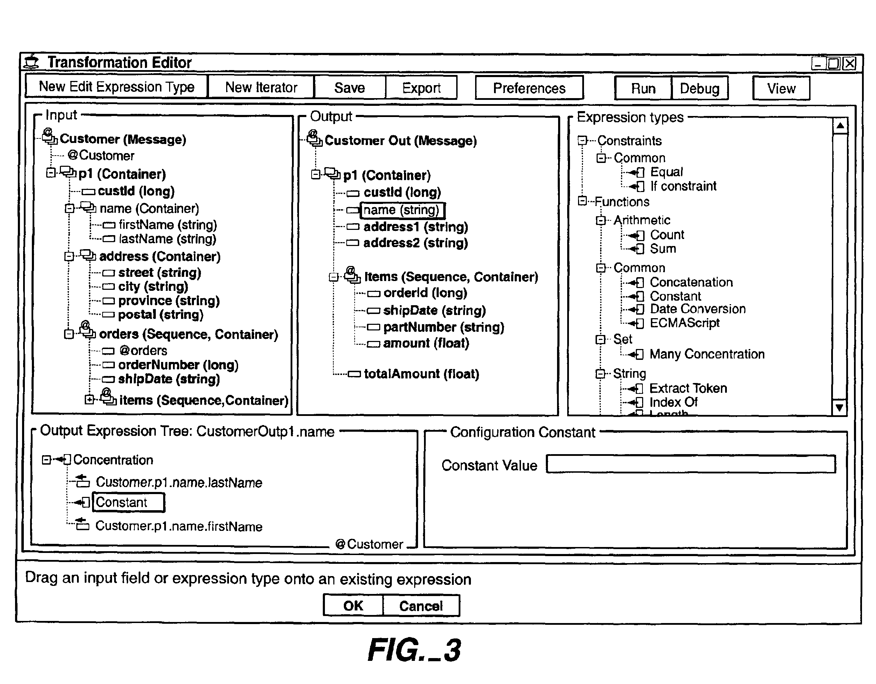

Selection of a particular application program or a sub-catagory under a program as input generates a tree representing an input schema. Selection of another application program or a sub-category under a program as output generates a tree representing an output schema. In one graphical embodiment which may utilize the present invention, these schema are displayed at the same time in a single window of a graphical user interface. Figure 3 illustrates in the upper left two panels input and output schema of two representative applications displayed in the same window. Depending on the embodiment, display may be in individual windows appearing on one or more output displays.

As may be seen in Figure 3, each of the input and output schema are represented in the tree view described above. Each tree begins at a root position that functions as a container. Below the root are arranged the various containers, sequences, and fields which represent the schema.

Once the input and output schema have been displayed in the graphical embodiment, an output field is selected to receive an expression tree that defines its content. In the figure, "name" is blackened to show that it has been selected.

For this selected output field, a transformation is then defined which defines the rules for building the particular output field from zero or more of the input fields. It is often true that many of the input fields require only to be copied to the output field and do not require further transformation. In this case, a simple drag from the input field to the output field forms an expression tree that copies the input to the output. An illustration is dragging "custId" from the input schema to the output schema in Figure 3. Those fields that require transformations will be apparent from differences in the input and output schema provided and from the user's requirements for the output data. For example, the input field references "firstName" and "lastName" require a transformation to produce the "name" field of the output schema in Figure 3.

When defining a transformation, the process for constructing each output field is defined. For each output field to be populated with data (it is permissible for an output field to be left empty), a set of rules to create that field is defined. These rules are built using "expressions." An expression is a set of computer code that takes as its input zero or more "parameters," manipulates those parameters in a manner specific to the type of the expression, and produces a single result. This result may be placed in an output field or may be a parameter to another expression. The parameters of an expression are other expressions. In order to define the rules for any particular transformation, an expression tree is constructed. Using this procedure, the following "expression tree" can be formed:

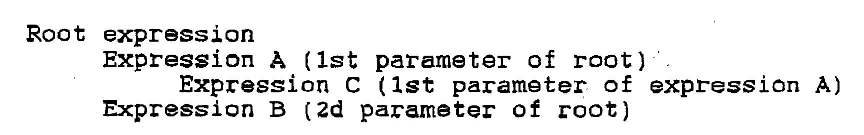

In the above example, the root expression has two parameters, expression A and B; and expression A has a single parameter that is expression C.

Each expression has a name that is used to identify that expression in the expression tree.

There are four categories of expressions for the purpose of this specification:
1) Field Reference - an expression that references a field from the input message. The value of the specified field is the result of the field reference. The name of the field reference is the fully qualified name of the input field. An example of a field reference is Customer. LastName that refers to the last name field of the customer container. A field reference is the only means of referencing data from the input message.
2) Function - an expression that returns a result, usually by manipulating its parameters. A function is an instance of some named function type that defines the behavior of the function. For example, a "concatenation" function returns the value of all of the parameters concatenated together. Another example is a "constant" function that takes no parameters and simply returns a constant value.
3) Formal Parameter - an expression that defines the existence of a named parameter for its parent function or constraint. The name of the formal parameter expression is the name of the parameter, which has its meaning relative to the parent function or constraint. For example a "subtract" function would have two formal parameters, one called "value," and the other called "subtrahend," where the subtrahend is subtracted from the value.
4) Constraint - an expression that returns only a true or false result based on the value of its parameters. Like a function, a constraint is an instance of some named constraint type that defines the behavior of the constraint. For example, an "equals" constraint takes two parameters and returns "true" if they are equal and "false" if they are not.

In a graphical embodiment, each of the categories of expressions is displayed in a window of the output display in a manner such as that illustrated in Figure 3 of the drawing. In the GUI expression tree, each node is an expression and each node is identified with an icon showing the type of expression (function, constraint, formal parameter, or field reference), and a small amount of text describing the name of the expression and any relevant configuration information. The lower left hand panel of Figure 3 illustrates an expression tree.

Although an expression tree may be represented or specified in either a plain text format or constructed using programmatic interfaces, in a graphical embodiment, various drag and drop operations are defined between the trees. The techniques for defining these operations are well known to those skilled in the art of computer programming and will not be discussed further. It should be noted that many of these techniques have themselves been programmed to produce results by graphical manipulation. In one embodiment, the following graphical manipulations have been programmed using well known programming tools to produce the results described.
1) Dragging a field from the input schema to a field in the output schema produces an expression tree containing the field reference to the input field.
2) Dragging a container from the input to the output matches all of the enclosing fields in the input schema to the output schema by name, and has the same effect as if each of these fields was dragged as specified in item 1 above.
3) Dragging a function type to an output field creates *an* expression tree for that field which contains that expression type.
4) Dragging a constraint type to an input field creates the input constraint tree associated with that field's enclosing sequence.
5) Dragging an input field to an expression in the expression tree adds that input field as the last parameter of that expression.
6) Dragging an expression in the expression tree to another expression removes the dragged expression from its parent and adds the dragged expression as the last parameter to the expression that was dropped on.
7) Dragging a function or constraint type to an expression adds that function or constraint to the expression as the last parameter.

The expression tree is started by associating an initial function or field reference with an output field. In a graphical embodiment, this may be accomplished by dragging a copy of the function type or input field from its representation in a window of the display (such as that illustrated in Figure 3) and dropping the copy on the output field selected from the output schema. If the initial expression is a function and it has parameters, additional functions and field references may be added for each of the parameters. Some functions (or constraints) may have a variable number of parameters, in which case any number of functions/field references may be added as parameters. Other functions/field references may have only certain parameters, where each parameter has a name; in this case, a formal parameter expression is automatically provided that identifies the required parameter's name.

Functions and constraints are defined as "expression types" which each has a globally unique name. For example, the function type named "/functions/common/concatenation" is the code necessary to concatenate multiple parameters. When this function type is added to a particular expression tree, it becomes a function that is also an expression. There is a simple application-programming interface that function/constraint types must implement. This allows new function/constraint types to be added by anyone skilled in the art of programming. The upper right hand side of Figure 3 is an example of expression types.

Each function or constraint type may have configuration information associated with it. This configuration information is filled in when the function/constraint type becomes part of an expression tree. The "constant" function, which returns a constant value provides a simple example of configuration information. Its configuration information is the constant value. An example of this is shown on the lower right hand side of figure 3. Function/constraint types can be implemented as components using available component standards (for example, the JavaBeans specification from Sun Microsystems); in this case the type of configuration information required can be specified declaratively, according to the rules associated with the component specification in use.

A field reference is the simplest expression, taking no parameters and returning the value of the specified input field. If the value of the output field is to be set directly from the value of an input field, the expression tree associated with the output field contains only a single field reference, referring to the input field (e.g.,
Customer. Orders.PartNumber). Every output field expression tree that references data from the input message must do so through the use of one or more field references.

A more complex transformation for an output field may be defined using a function. A function can have parameters, each of which may be a function, field reference or formal parameter. For example, using the schemas defined in Figure 3, an expression tree to form the output customer name from a concatenation of the last name, a comma, and the first name of the input name field, would have the following form:

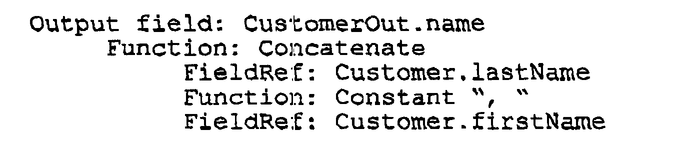

In the above example, the root of the expression tree is the concatenate function, whose result is therefore used to populate the CustomerOut.name field.

The above expression tree may be generated in the manner described above for a graphical interface in the following manner. The function concatenate may be dragged from its display position and dropped on the selected field CustomerOut. name. In the graphical embodiment, this will begin an expression tree under the customer name output field with the single expression. Then, the field "lastName" may be dragged from the input schema and dropped on the concatenate function of the output "name" field. A constant function with a comma value is next dragged from the function types and dropped on the concatenate function. Finally, the field "firstName" is dragged from the input schema and dropped on the concatenate function of the output name field.

A function or constraint may support either a variable or fixed number of parameters. If the function or constraint supports a fixed number of parameters, each parameter is a formal parameter expression whose name is the name of the parameter. The children of the formal parameter(s) are the actual parameter expressions, either a field reference or a function. If the function or constraint supports a variable number of parameters, the actual parameters are direct children of the function or constraint; formal parameters are not used. Here is an example of the use of a formal parameter of a multiply function. The configuration information associated with the function defines the multiplier as being .08. The formal parameter is the multiplicand that is a field reference to the total amount field.

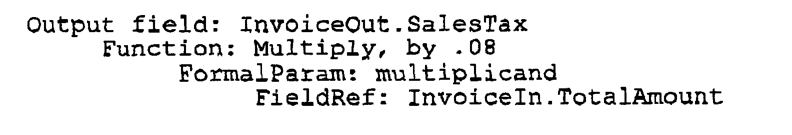

In this example, the function causes the input "Invoice.TotalAmount" to be multiplied by .08 to provide "InvoiceOut.SalesTax" in the output message.

Constraints are used to express conditional behavior. They can influence the execution of parts of the expression tree. In order to do this a constraint is associated with a function or field reference. Such a function or field reference is called a "constrained expression."

At most one constraint may be associated with the function or field reference. If the constraint returns true, the constrained expression behaves as if the constraint was not specified. If the constraint returns false, the constrained expression is said to return "no result". The handling of a "no result" return depends on the context. When "no result" is returned by a constrained expression that is a parameter of a formal parameter, the constrained expression is ignored; and the next parameter of the formal parameter is considered. If all of the parameters of a formal parameter return "no result", the formal parameter itself returns "no result".

If the constrained expression supports a variable number of parameters, only those that do not return "no result" are considered, the rest are ignored. The following example illustrates this point:

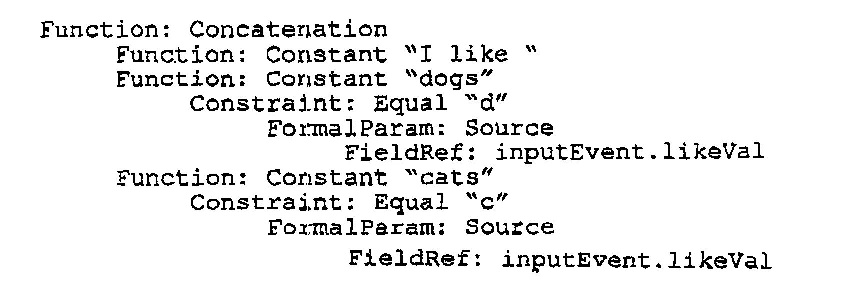

Here the Constant "dogs" and the Constant "cats" are the functions that are subject to the "no result" should their associated constraint evaluate to false. This results in "I like dogs" if the value of inputEvent.likeVal is "d", and "I like cats" if inputEvent.likeVal is "c", and "I like" if inputEvent.likeVal is neither "d" nor "c".

If the root expression returns "no result" then a null value is written to the output field. In the example above, "I like" is produced without more if both of the following parameters return "no result." An expression may treat a "no result" return in any way that suits it; if an expression receives a "no result" from one of its parameters and does not explicitly handle it, the expression itself returns "no result." An example of an expression providing special handling for "no result" is the "skip on no result" expression which discards the current output element from the lowest level sequence.

Each input sequence may be associated with a set of constraints that are used to control (filter) which elements of the sequence are to be considered for the output. For the purpose of the remainder of this description, we treat a message as a sequence. There are three categories of constraints any or all of which may be associated with each sequence.
1) The element of the sequence is dropped; if the sequence is the message, the message is dropped.
2) The entire message is dropped.
3) The entire message is treated as an error and sent to a separate error processing system.

If no constraints are specified or the constraint returns true, nothing is done; and the message or sequence element is accepted for further processing.

Since the above mentioned. constraints are expressions, these are also the root of expression trees, i.e. each constraint takes parameters which can be other constraints, functions, or field references. With the use of simple constraints like "and" which returns the intersection of all of its parameters, and "or" which returns the union of all of its parameters, arbitrary expressions can be used for sequence filtering.

Here is an example is of an input constraint that accepts messages only for customers whose province field has the value of "PA".

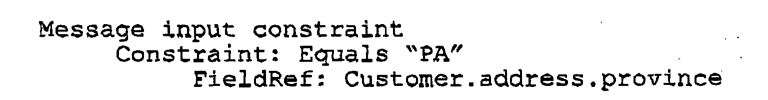

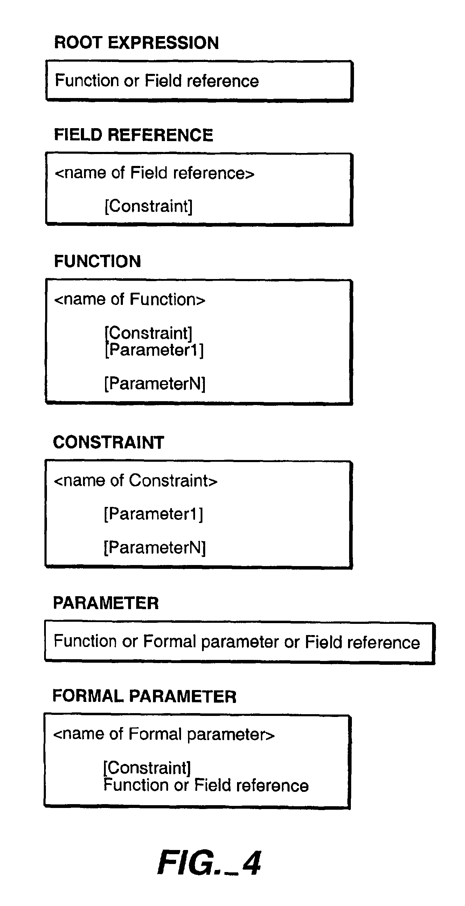

The described process for creating a transformation lends itself well to a programming environment which greatly simplifies the tasks by which a person adept at programming may generate expression trees. Figure 4 provides the outline for implementing a process by which the steps necessary to produce the expression tree are defined, regardless of which type of interface is used. By following each of the combinations of these steps, one can produce all of the legal expression trees and never produce an invalid one. This is a method of specifying the results associated with the expresssion tree precisely and unambiguously.

Having selected a field of the output schema which is to be produced, a programmer moves to the root box of the outline shown in Figure 4. In the root box, the programmer chooses one of the possible operations. The possible operations which may be accomplished from the root box are given as "function" or "field reference." Thus, the programmer chooses one of these to replace the root box. The choice depends on what is to be accomplished for that field. In the example described above in which first and last names from the input schema are concatenated to provide an output name field, the operation to be performed to generate the output field is the function type "concatenate." Consequently, the programmer goes to the box "function" and replaces the "<name of function>" with "concatenate," one of the function types provided.

The programmer then proceeds to the possible choices which follow in the function box; these are "constraint" and a plurality of "parameters." There are no constraints in the concatenation operation; however, there are three parameters involved in the particular concatenation operation. Consequently, the programmer proceeds to the "parameter" box which provides "function," "formal parameter," and "field reference" as choices. In this case, the parameter is the field reference "firstName" from the input schema. The programmer proceeds to the "field reference" box and replaces the "<name of field reference>" with "firstName." There are no constraints for the field reference, so this parameter is complete.

The programmer then returns to the function box to complete the remaining "parameters" for the concatenation function. The programmer again proceeds to the parameter box where "function" is chosen because the next parameter is the "constant" function type. This leads to the function box where the name of the function is replaced by "constant" and a comma "," is specified as a configuration property of this function. This completes the second parameter of the function.

The programmer returns to the function box to complete the last "parameter." This leads to the parameter box and then to the field reference box where the "<name of field reference>" is replaced by "lastName." This completes the programming necessary for generating an expression tree in accordance with the described process. Those skilled in the programming art will recognize that this process will provide an expression tree which accurately represents the desired result in an easy and understandable manner. More importantly, this simple programming interface eliminates the chance of error so prevalent in programming.

### General Discussion on Iteration

The present invention defines a process for configuring a transformation specification dealing with sequences. This process consists of several rules as described below. It is possible by those skilled in the art of programming to implement this process given an understanding of the rules presented below.

In the current art, the way one specifies how many times an output sequence iterates (i.e., how many elements are in the output sequence) is to write a computer program to specify the loop. An example of such a specification is:

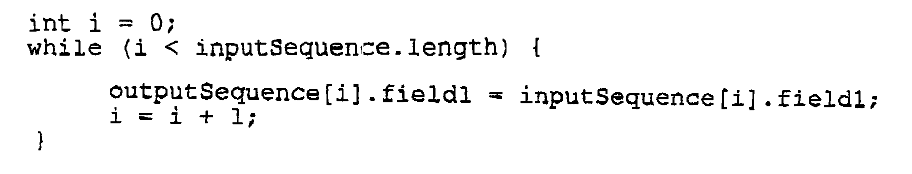

In this loop by which values of field1 of an output sequence are determined from values of field1 of an input sequence, an integer value is first set equal to 0. Then, a test is conducted for each iteration of the loop to determine that the particular iteration is less than the number of items in the sequence and the first output field1 of the output sequence is set equal to the value of the first input field 1 of the input sequence. Finally, the number of the loop iteration is incremented; and the loop is restarted.

In addition to requiring programming skills, something that this invention strives to avoid, the above type of specification is not the most efficient method for specifying the contents of an output sequence.

In the majority of cases, such as that illustrated by the code fragment described above in which an output sequence is to be generated from values in an input sequence, there is a correspondence between the number of elements in the input sequence and the number of elements in the output sequence. For example, both the input and output messages may contain a sequence of the customer's orders (i.e., some number of the customer's orders). When a field is copied from the order sequence in the input message to the order sequence in the output message, it is possible to automatically calculate the number of elements in the output sequence. Each of the customer's orders in the output message can be constructed from the fields contained in an order from the input message so that the output message has the same number of orders as the input message.

The present invention uses this correspondence to calculate which elements are to be present in an output sequence. This relieves the user of having to explicitly specify the iteration in the manner illustrated by the coded example shown above.

Using this technique, a simple copy of an input field to an output field can give the transformer all of the information it needs to calculate the desired iteration of the output sequence without any further specification by the user. By providing additional information about the desired iteration characteristics in a declarative fashion (as opposed to writing code), the present invention can handle complex iteration cases and is as expressive as the OQL standard in terms of its transformation capability.

In cases where there are many input and output sequences and fields must be copied between them, the present invention provides the correct number and order of elements in the output sequences without the user making any explicit specification of iteration. Should the user desire to do more than copy data from an input sequence to an output sequence, advanced features of this invention can be used explicitly.

"Iterators" are associated with sequences. An iterator is used to determine how each element of a sequence is processed (e.g., in a sequence of orders, how many orders are processed). This information is then used to determine how output sequences should iterate, or how many times certain functions and constraints should be executed. The iterator can be thought of as a declarative way of specifying a loop. For example, an iterator may be specified which processes each member of the sequence in the order that is present in the sequence. This is the default specification of an iterator in the present invention.

An iterator may have other properties that define how an input sequence is to be processed. These properties include, but are not limited to sorting, uniqueness, and the lockstep property which is described below. The selection of these properties is done by the user of the present invention using standard graphical or other techniques to select characteristics. For example, in the preferred graphical embodiment of the present invention, a configuration panel may be presented allowing the user to select the desired characteristics (e.g. which field to sort on, should the iterator be unique).

An iterator sorts by specifying the order in which the input elements are processed. For example, an iterator may specify that the items associated with a customer's order be processed with the highest priced items first.

Sometimes sequences contain multiple elements which are either completely identical (that is, all fields within the element have the same value), or where some fields have the same value. An iterator property may specify that only unique items be processed (that is, the second and subsequent copy of identical items are ignored). Another iterator property may specify that only one element for each unique value of a given field should be processed. For example, it may be desirable to process only one item for each distinct part number of a customer's order.

Each iterator has a name that is unique within the transformation specification. Iterators are shown for the remainder of this description as "@iteratorName" in order to distinguish the name of an iterator from a field, container or sequence.

There are two types of iterators, input iterators and output iterators. Each input sequence is associated with one or more input "iterators." Each output sequence may be associated with at most one output iterator. An input iterator describes the iteration of a sequence in the input message. The input iterator is normally used to specify how many times an output sequence needs to iterate. For example, if the input message has a sequence representing the orders for a given customer, the output message can have a similar sequence with an element for each order. The input iterator associated with the orders sequence is used to specify this, as described below.

There are some (relatively rare) cases where a sequence in the output message needs to iterate more frequently than some sequence in the input message. For these cases, an output iterator is necessary. The frequency of iteration of an output iterator is specified by an expression that returns an integer value, specifying how many times the output iterator will iterate.

An example of this is a case where a single input field contains multiple values and it is desired to have each value be copied to an output field which is contained in a sequence. For example, suppose there is a "name" input field which is expected to contain a value of the last name, a comma and then the first name, for example "Lyman, Gerald." The desired output is a sequence of name/value pairs like this:

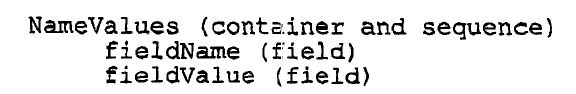

The first element of the output sequence should have a FieldName of "LastName", and a FieldValue of "Lyman." The second element has a FieldName of "FirstName" and a FieldValue of "Gerald." To accomplish this, an output iterator is associated with the NameValues sequence, and the expression providing the count of the number of iterations is a constant function returning the value two.

Most of the discussion in tins specification is related to input iterators, thus henceforth the unqualified use of the term iterator will mean an input iterator.

### Input Iterators

By default a single input iterator known as the "default iterator" is associated with each sequence and given the name of the sequence. Additional iterators may be added as desired.

Except for the iterator associated with the message, each iterator has a single parent iterator. The parent of the default iterator is the iterator associated with its enclosing sequence. A few examples are shown to illustrate how iterators work. Consider a schema containing the following sequences:

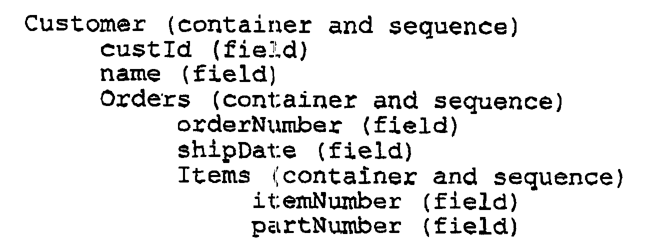

By default iterators are associated with each input sequence (note that iterators are associated only with the input sequences and not the fields), as shown:

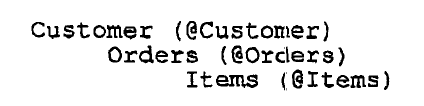

Consider a single Customer message that contains three orders (a sequence of orders) and in which each order contains four items (a sequence of items). The iterator @Customer has no parent; the parent of the iterator @Orders is @Customer; and the parent of @Items is @Orders. For a single customer message, the iterator @Customer will iterate once since only a single customer is involved. For this single customer message, the iterator @Orders will iterate three times (once for each order) within its parent @Customer since this customer has placed three orders. For this single customer message, the iterator @Items will iterate twelve times, one time for each of the four items associated with each of the three iterations of its parent @Orders. Thus, the number of times each iterator iterates depends on the number of times its parent iterator iterates.

A tree of the iterators can be formed by relating each iterator to its parent. The tree of iterators in this example exactly corresponds to the sequences and shows the iterator for each node with its sequence following in parentheses:

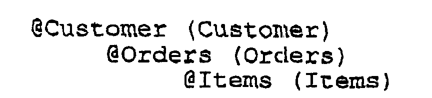

In the above examples, the output sequences have elements corresponding to the input: sequences that are always in the same order as is specified as in the input sequences. Suppose it is desired to provide an output message for each item, and within that message a sequence that contains all orders with the same customer number as that of the customer. The output message schema would look like this:

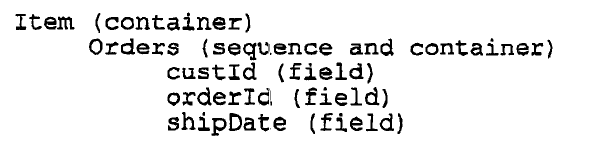

However, to accomplish the desired result, each order must be examined in the scope of a particular item. This requires an additional iterator to be added to specify each order for each item. Thus, a new iterator @OrdersItems associated with the Orders sequence is added as a child to the @Items iterator. The iterator tree then looks like this:

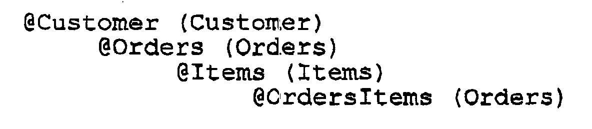

This schema requires that for every item the process iterate through all of the orders. In order to do this, the operation iterates through any sequences that are between the message and Orders (in this case there is only one, the message itself). Considering the message data discussed above, the iterator @Items iterates twelve times. The iterator @OrdersItems iterates once for each order within each of the Items. This results in a series of twelve (Items) times three (Orders) equals thirty-six individual operations.

### Iteration of Output Message Sequences Using Input Iterators

Having presented the behavior of iterators against input sequences, their relation to the output sequences can be described. A single input iterator is associated with each field reference. This iterator is associated with the enclosing sequence of the field. Since, for the purpose of this discussion, the message is also a sequence, even a field reference with a top level field of a message references an iterator, the iterator associated with the message. As discussed above, a field name can be specified with full qualification, for example:
Customer.Orders.orderNumber

In one graphical embodiment of the invention, when the iterator associated with a field reference is a default iterator, the field name is expressed with no reference to the iterator, as is shown in the example above. In the same graphical embodiment, if the iterator is not a default iterator, it is shown after its sequence. For example:
Customer.Orders(@OxderItems).orderNumber

In one graphical embodiment of the invention, when a field reference is selected and there are multiple input iterators associated with the enclosing sequence of the field, the interactive interface asks the user to specify the desired input iterator. If there is only the single default iterator, that iterator is automatically assumed.

As presented above, in an expression tree every field reference is ultimately associated with a single output field. This association may be direct in the case where the field reference is the root expression of the expression tree for the output field, or the association may be indirect because the field reference is a parameter to some function that is in the expression tree for the output field.

Every output field has an enclosing sequence (recalling that the message is treated as a sequence). Therefore, how the enclosing output sequence iterates can be determined by examining the field references contained in the expression trees associated with the output fields contained in the output sequence. Following is a simple example of this, using the above message as both the input and the output:

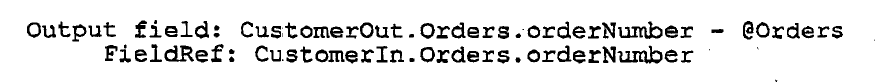

In this example, an iterator is shown after the name of the output field. This iterator is used to determine how many times the enclosing output sequence of the OrderNumber field (i.e., CustomerOut.Orders) iterates. The effect is to generate an element in the enclosing output sequence for the field OrderNumber for each iteration of the input sequence CustomerIn.Orders. This result occurs because the iterator associated with the field reference is @Orders (which is the default iterator for Orders, the enclosing input sequence of OrderNumber).

To produce for each order an output which gives the CustomerName, the OrderNumber, the Items ordered, each with its ItemNumber and PartNumber, start with the following message:

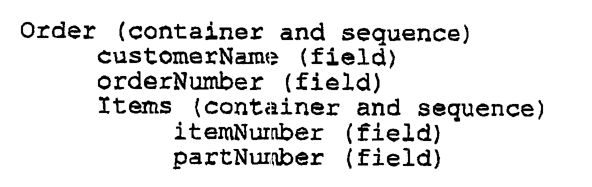

Using the Customer message defined above in Figure 3 as the input, a field reference is first added to associate the customer's name with each output order message.

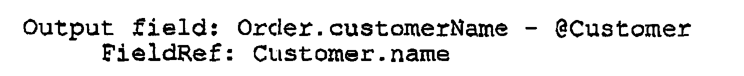

Note that the iterator associated with the enclosing output sequence (which is the Order message) is @Customer. This is because the rule associating the iterator from the field reference to the enclosing output sequence was followed. If this transformation were executed, it would produce one output Order message for each input Customer message.

Next, the OrderNumber field reference is added to the OrderNumber output field. At this point, an interactive interface could ask the user if it desired to change the way Order iterated from @Customer to @Order. If the user approved, the two field references would look like this:

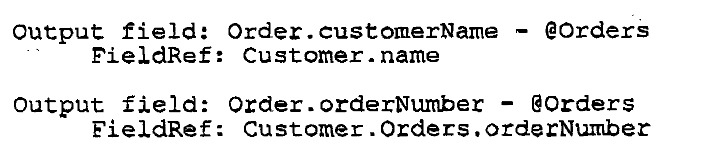

### Iterator Compatibility

Knowing how to relate the iteration of output sequences with the iteration of input sequences allows consideration of how multiple input iterators can be used together in producing output sequences. To illustrate the problems in this area, the following example is used:

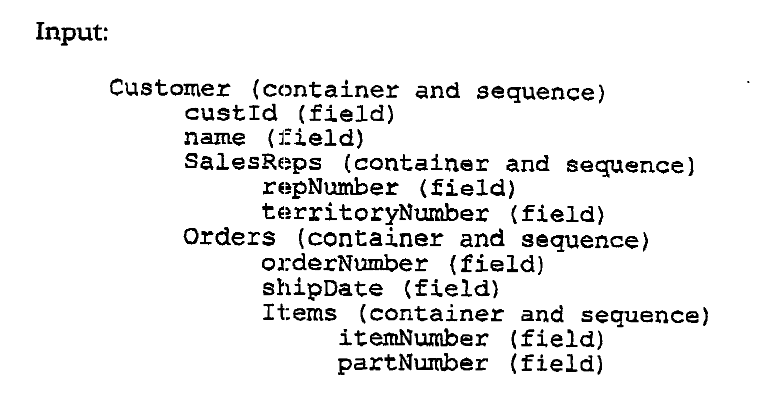

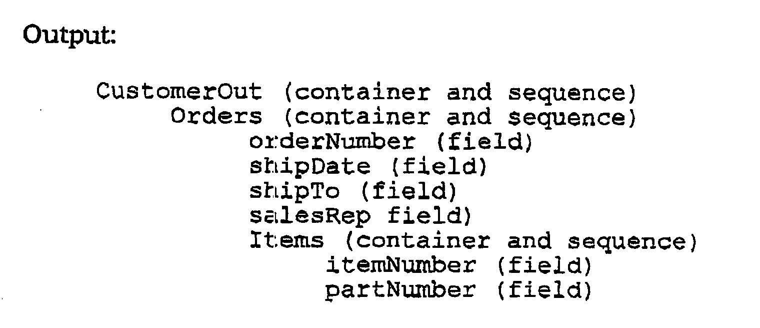

This example has the following default iterator tree (built as specified above):

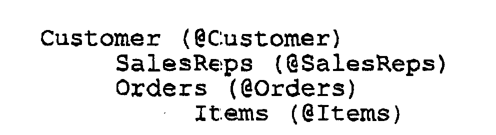

Suppose the following expression trees were defined:

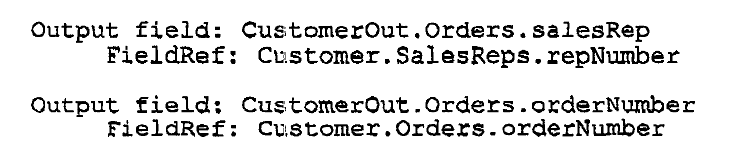

This would cause a conflict in determining how the output sequence CustomerOut.Orders iterates. This is because one of the field references refers to the @Orders iterator and the other refers to @SalesReps. Since these iterators have no relationship, it cannot be determined how to iterate the output sequence CustomerOut.Orders. The above specification of the expressions trees is therefore not legal.

Consider these expression trees:

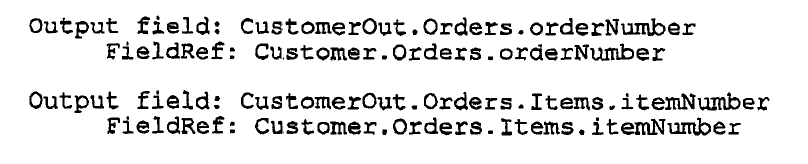

With the above field references it can be determined that the Orders output sequence iterates using @Orders, and the Items output sequence iterates using the iterator @Items. Further, that each element of the Items output sequence, is part of the element of its corresponding order. So it is clear and unambiguous that the correct items are associated with the correct orders. This is known because the @Orders iterator is a parent of the @Items iterator in the iterator tree (which was determined because the Orders input sequence contains the Items input sequence). These expression trees are therefore legal.

In order to define legal selection of iterators, rules are defined to determine if iterators are compatible. Only compatible iterators can be used for field references in the same output sequence (whether such field references are directly associated with fields in the same output sequence, or the field references are contained in expression trees of fields in the same output sequence).

It is permissible to have multiple field references associated with the same enclosing output sequence and having different iterators, so long as those iterators are related in an ancestor/descendent relationship within the iterator tree. Iterators with such a relationship will be called "compatible". If the iterators are compatible, the output sequence iterates according to the lowest level iterator. If the iterators do not have such a relationship, an error is given at configuration time.

Except for certain cases described below, all field references in the expression trees associated with the output fields for a given sequence must consist of compatible iterators.

### Lockstep Iteration

Suppose there are two input sequences at the *same* level that contain related data that need to be combined into a single output sequence. Since the sequences are at the same level, it is not possible to automatically determine a relationship between the two sequences. A single output sequence cannot be determined because it is not known which of the input sequences should be picked to determine how the output iterates. If the sequences are in fact related, the user can declare that one sequence is in "lockstep" with another. With this information, fields from either sequence can be used to form a single output sequence, because the iterators associated with both of the sequences are kept in lock step with each other.

Consider for example the following:

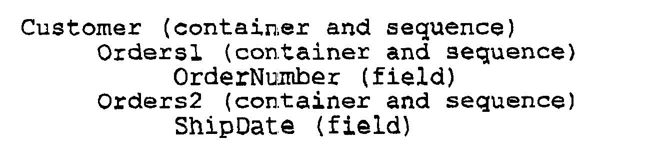

In this case, a single orders sequence is to be output that contains the OrderNumber and its associated ShipDate. To do this, both sequences must be traversed at the same time such that when the ShipDate is referenced from Orders2 it is from the same element number as the element in Orders 1 containing the OrderNumber.

As discussed above, electing lockstep for an iterator is a property of the iterator and is done using the normal method for iterator property configuration, similar to that which configures the sorting and uniqueness properties.

### Iterators and the Expression Tree

In the sections above the relationship between the input sequences and output sequences was discussed. This included how an iterator was associated with an output sequence, and the notion of iterator compatibility between iterators associated with different fields in the output sequence. In this section, issues associated with iterator compatibility are discussed within the expression tree.

Expression trees can do a number of basic things with respect to iteration.

An expression tree can process data so that the output occurs at the same rate as the input as shown in the concatenation expression tree described above. In such cases, all of the expressions in the tree iterate at the same rate and therefore must refer only to field references with compatible iterators. This is referred to below as one-to-one.

An expression tree can aggregate data that occurs more often (at a higher frequency) into a single data item. This is used, for example, to add the values of the unit cost field for all of the items in an order to determine the single total cost of the entire order. Here the unit cost field iterates at a faster rate than the output total cost field. This is referred to below as many-to-one.

An expression tree can produce multiple elements from a single input field. For example, suppose the input field contains multiple values separated by commas, and an output element is desired for each, as shown below:

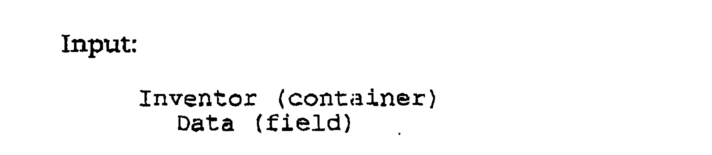

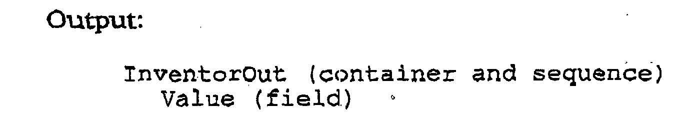

Data contains: "Edison, Thomas, 123 Main St". The desired output is:
Element 1 - value: "Edison"
Element 2 - value: "Thomas"
Element 3 - value: "123 Main St."

This is referred to below as one-to-many.

Functions and constraint types have properties which can be selected that determine their behavior with respect to iteration.

A one-to-one expression is an expression where all of the parameters iterate using the compatible iterators, and the result of the expression iterates at the same rate as the lowest iterator in the parameters of the expression. All of the functions and constraints types described so far have been one-to-one.

A many-to-one expression is an expression where the parameters iterate more frequently than the result of the expression. Unless the sequential property described below is specified, all of the parameters must be compatible iterators and they must all iterate at the same rate. However the result of the expression iterates at a rate corresponding to some ancestor iterator of the iterators associated with the parameters. This type of expression is used for aggregation, for example to compute the sum of sequence of numbers. Here is an example of a expression tree that uses a many-to-one function which calculates the sum of the cost of each item:

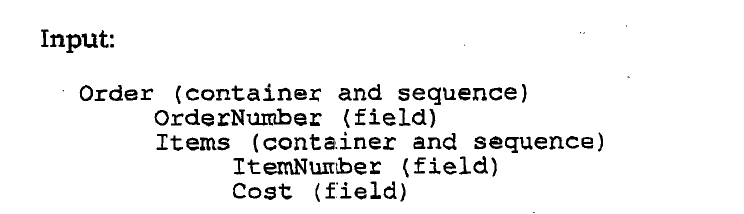

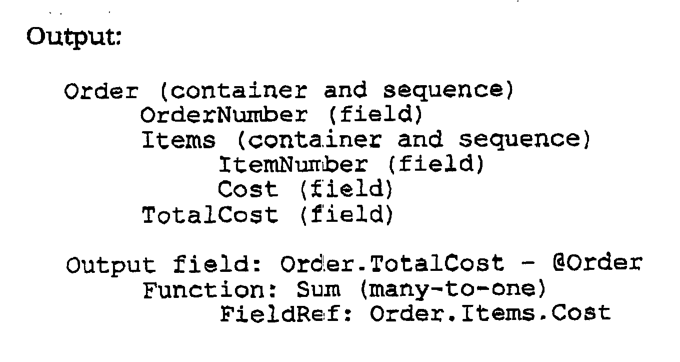

A one-to-many expression is an expression where the result iterates more frequently than the input parameters. The input parameters iterate according to the rules for a one-to-one expression. In this case, the rate of iteration associated with the result is more frequent than the input iterator, and is further not related to the rate of any input iterator. An implicit iterator is defined that describes this output iteration. For the purpose of determining iteration compatibility, this implicit iterator is assumed to exist representing the iteration rate of the expression, and that implicit iterator is not compatible with any other iterator. An example of this type of function is a tokenizer, which produces an element in a sequence for each token found in a string. Here is a example of an expression tree using a one-to-many function used in the above inventor example.

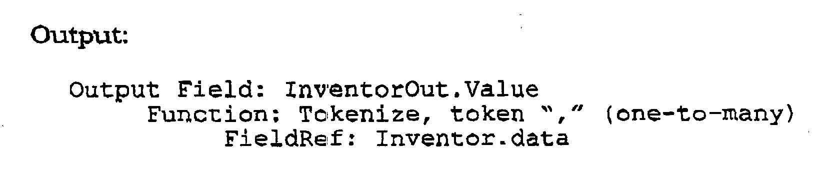

A many-to-many expression tree combines the one-to-many and many-to-one properties.

A sequential property is used only for the many-to-one or many-to-many expressions. This property specifies that all of the iterations associated with each parameter are to occur before considering the next parameter. This is the only case where the iteration of the parameters of a function may be described by multiple iterators. If the sequential property is not specified, all of the parameters are handled "in-step" since they are iterating at the same rate. An example of the need for the sequential property is a sum function that can calculate the sum of many different sequences, each iterating in an unrelated manner.

Each function/constraint type may be associated with only one of the one-to-one, one-to-many, many-to-one, and many-to-many properties discussed above. The sequential property can be used only when one-to-many and many-to-many properties are specified.

The above rules define how expressions can be related in an expression tree. Further, as specified. above, each field in an output sequence that has an expression tree must have a compatible iterator as the result iterator of the root of the expression tree.

### Procedure for Calculating Iterator Assignment

This section describes the procedures for adding expressions that refer to iterators. It has been shown above how iterators are associated with field references. At the time a field reference is added to an expression tree the other expressions in the tree need to be checked for iterator compatibility. In addition, all of the field references within the output sequence containing the expression tree need to be checked. During this checking process, both expressions and schema nodes are associated with an iterator which describes how often they are to execute.

In order to facilitate the process of validity checking of iterators it is useful to define the concept of an "iteratable object." An iteratable object is simply another name for both schema nodes and expressions.

Therefore, a schema node is an iteratable object and an expression is an iteratable object. Since both schema nodes and expressions are arranged into trees, and the expression tree is associated with an output schema node, we can refer to a tree of iteratable objects as the entire tree formed under a given schema node (containing both any descendent schema nodes and expression trees associated with those schema nodes).

Iteratable objects have one or more of the following properties:
1) Many input parameters - The iteratable object and its parameters iterate more frequently than the result of the iteratable object. For expressions, this corresponds exactly to the many-to-one and many-to-many iteration properties of expressions as defined above. For schema nodes, if the schema node is a container and a sequence it has this property, otherwise it does not.
2) Sequential parameters - This corresponds exactly to the sequential parameters iteration property of expressions as defined above. This property is never specified if the iteratable object is a schema node.
3) Many output parameters - This corresponds exactly to the one-to-many and many-to-many iteration property of expressions as defined above. This property is never specified if the iteratable object is a schema node.

Any iteratable object can be associated with a single input iterator which tells the execution engine how frequently that object is to execute.

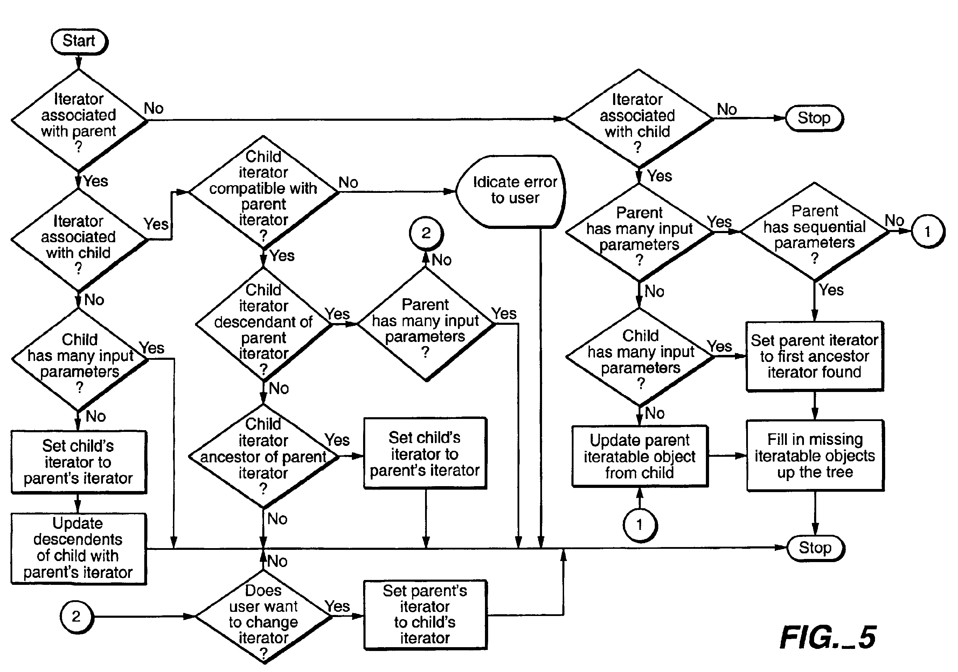

When adding an iteratable object as a child of another iteratable object (in this case, the child object is always an expression, but the parent object might either be an expression or schema node), the following conditions are possible. A flowchart corresponding to these conditions and steps is shown as figure 5.
1) There is no iterator associated with the parent iteratable object, and there is no iterator associated with the child iteratable object. In this case, nothing is done and this procedure terminates. This can happen for example when a "constant" function is added to a schema node associated with a field when the iterator for the (field) schema node has not yet been determined.
2) There is no iterator associated with the parent iteratable object, and there is an iterator associated with the child iteratable object. If the parent iteratable object has many input parameters, and does not have the sequential parameters property, continue execution at step 6. If the parent iteratable object does not have many input parameters, and if the child iteratable object does not have many input parameters, continue execution at step 6. Set the parent's iterator to the iterator associated with the nearest ancestor to the parent iteratable object. If there is no iterator associated with this first ancestor iteratable object, associate the root iterator (that is the iterator associated with the root input schema node) with the parent and all of its ancestor iteratable objects. This procedure terminates here.
3) There is an iterator associated with the parent iteratable object, and no iterator associated with the child iteratable object. If the child iteratable object has many input parameters, this procedure terminates here. Otherwise, set the child iterator to that of the parent, and set all of the descendent iteratable objects of the child iteratable to the iterator associated with the parent, stopping when a descendent with many input parameters is reached. This procedure terminates here.
4) There is an iterator associated with both the parent and child iteratable objects. Determine if the iterators are compatible according to the compatibility rules. If the iterator is not compatible, give an error to the user and terminate this procedure. If the iterator associated with the child iteratable is a descendent of the iterator associated with the parent iteratable continue to step 5. If the iterator associated with the child iteratable is an ancestor of the iterator associated with the parent iteratable, change the iterator of the child to be that of the parent, and terminate this procedure.
5) If the parent iteratable does not have many input parameters, ask the user if they intend to change the iterator for the output sequence, and if they do, change the parent iterator to be the child iterator, and terminate the procedure. If the user does not want to change the parent iteratable, terminate the procedure. If the parent iteratable has many input parameters, terminate the procedure without changing any iterators.
6) Update the parent iteratable object with the iterator associated with the child iteratable object. Continue updating all of its ancestors, up to, but not including the ancestor object with many input parameters. This procedure terminates here.

### Iterators and Input Constraints

As discussed above, each input sequence may be associated with a constraint that acts as a filter for that sequence. Using the present invention, such a constraint may also be associated with an input iterator.

### Rules for Output Sequence Iteration

An output sequence is always associated with an input iterator. As described above, this iterator is the lowest level iterator of all of the result iterators associated with the root expression for each of the fields in the sequence.

An output sequence may be associated with an output iterator. In this case, the output sequence iterates once for each iteration of its input iterator, and within each of those iterations, once for each iteration of the output iterator.

Although the present invention has been described in terms of a preferred embodiment, it will be appreciated that various modifications and alterations might be made by those skilled in the art without departing from the spirit and scope of the invention. The invention should therefore be measured in terms of the claims which follow.

## Claims

1. A computer-implemented process for specifying instructions for transforming an input message to an output message comprising the steps of:
defining an input iterator with each sequence of the input message,
associating an input iterator with a sequence of the output message in response to placement of a field reference in an expression tree within an output sequence.

2. A computer-implemented process as in Claim 1, with an additional step of determining if the input iterator is compatible with a present input iterator associated with the output sequence before associating the input iterator with a sequence of the output message.

3. A computer program element comprising computer code means to make a computer execute a process as claimed in Claim 1 or 2.

4. A computer program element as claimed in Claim 3, embodied on a computer readable medium.
